# EUROPEAN PATENT APPLICATION

(11) **EP 1 624 253 A1**
(43) Date of publication of application: **08.02.2006**
(21) Application number: 04425614.7
(22) Date of filing: 05.08.2004
(51) Int. Cl.: F24C 15/02

(54) **Gasket for pyrolytic ovens**

(71) Applicant: Giat S.p.a, 20068 Peschiera Borromeo MI (IT)
(72) Inventor: Bocca, Luigi, 20125 Milano MI (IT)
(74) Representative: Adorno, Silvano

(57) **Abstract**

The present invention relates to a gasket (1) for a pyrolytic oven, comprising a tubular member (2) made of glass fiber, provided with a metal reinforcement. Inside said tubular member there is arranged at least one metal strap (3) provided with hooks (4) which protrude out of said tubular member (2) through suitable openings of said tubular member (2).

## Description

The present invention relates to a gasket for pyrolytic ovens and particularly to a gasket for domestic pyrolytic ovens.

It is known that pyrolytic ovens are suitable for decomposing complex organic compounds by transforming them into simple organic compounds by means of a thermal treatment at high temperatures. Domestic pyrolytic ovens can be set with one or more pyrolytic cycles at a temperature of about 500°C which is maintained for about one hour. Under these conditions, the residues of food and the encrustation present inside the oven are decomposed by means of the high temperature and become easily removable. For this reason, the ovens functioning in such a way are also called "self-cleaning" since they only require a minimum cleaning maintenance.

The rubber gaskets used in the normal domestic ovens are not suitable for being used in these applications since they are not resistant to such high temperatures and therefore they do not guarantee the necessary thermal seal. For this reason, gaskets made of a glass fiber fabric are applied in the pyrolytic ovens.

In particular, the gaskets for pyrolytic ovens are formed of a tubular member of a glass fiber fabric, which is provided with a metal reinforcement suitable for providing substance to the gasket so that, once opened the oven, the gasket may regain the initial shape, which has been inevitably distorted during the closure period because of the compression between the oven door and front. Said metal reinforcement may consist either of a further tubular member, inserted inside the first one and made of a metal fiber fabric, or of suitable metal threads intertwined with the glass fibers.

Said gaskets are further provided with hooks made of metal wire fixed to the gasket and suitable for providing a fitting connection together with suitable holes made in the oven door or front.

However, contrary to the normal gaskets made of elastomer, the gaskets for pyrolytic ovens cannot be stretched, since they are not elastic, and therefore, in order to ensure a good adhesion to the oven and therefore a perfect thermal seal of the latter, a high number of hooks and corresponding holes is needed. This obviously implies an increase in the manufacturing costs of the gasket and of the time requested for mounting the gasket on the oven in the production line.

Object of the present invention is therefore to provide a gasket for pyrolytic ovens which has a low manufacturing cost and that can be mounted in a simple and quick way, however ensuring a perfect thermal seal of the oven. Said object is achieved by means of a gasket whose main features are specified in the first claim and other features are specified in the remaining claims.

Further advantages and features of the gasket for pyrolytic ovens according to the present invention will appear to those skilled in the art from the following detailed and non-limiting description of some embodiments thereof with reference to the accompanying drawings, wherein:
Figure 1 shows a partial perspective view of a gasket according to a first embodiment of the invention;
Figure 2 shows a partial cut-out view of the gasket of figure 1 and of the oven front whereto it is applied;
Figures 3a, 3b and 3c show perspective views of some metal straps which can be used in the gasket according to the present invention; and
Figures 4a, 4b, 4c and 4d show details of metal straps which can be used in a gasket according to the present invention.

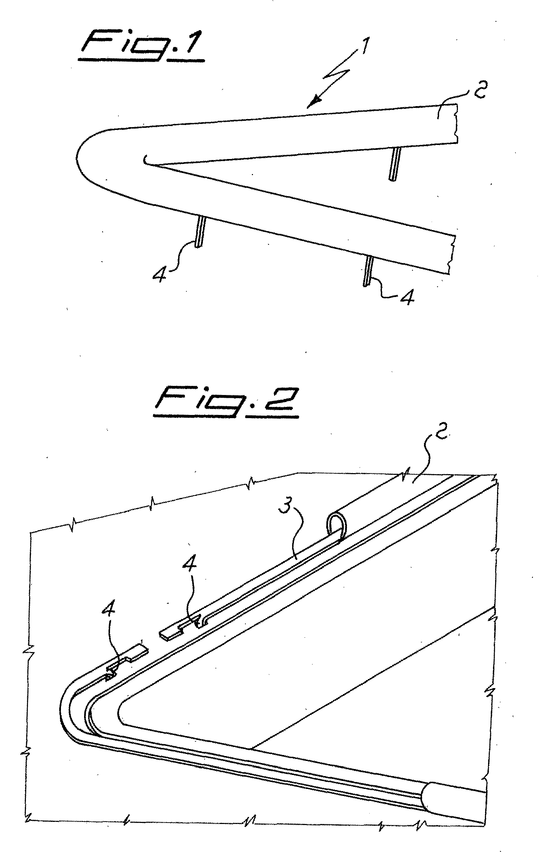

With reference to figure 1, there is shown that a gasket 1 for pyrolytic ovens according to the present invention comprises in a known way a tubular member 2 in glass fiber, and is provided with a metal reinforcement of any kind, not shown in the figure. The latter may consist either of a further tubular member, inserted inside the first one and made of a metal fiber fabric, or of suitable metal threads intertwined with the glass fibers.

As shown more clearly in figure 2, gasket 1 according to the present embodiment of the invention comprises at least one metal strap 3, inserted inside the tubular member of glass fiber and optionally also inside the further tubular member which forms the metal reinforcement of the gasket.

Metal strap 3 is provided with hooks 4 which protrude outside said tubular member 2 through suitable openings of said member. Said openings are not necessarily made in the tubular member 2 before inserting the metal strap, but they can be made at the moment of the final application of the gasket by exerting with the hooks themselves a pressure on the internal wall of tubular member 2.

Said hooks 4 are suitable for fixing the gasket to the door or front of the pyrolytic oven in a tight way, by getting engaged into suitable holes made in said door or front.

By virtue of the metal strap 3, the gasket according to the present invention can be fixed also with few hooks and remains adherent to the door or front of the oven thus ensuring a perfect thermal seal of the same. Further, as shown in the following, metal strap 3 is made in an extremely simple way and therefore the cost of manufacture of the gasket according to the present invention is very low with respect to those of the gaskets for pyrolytic ovens known until now.

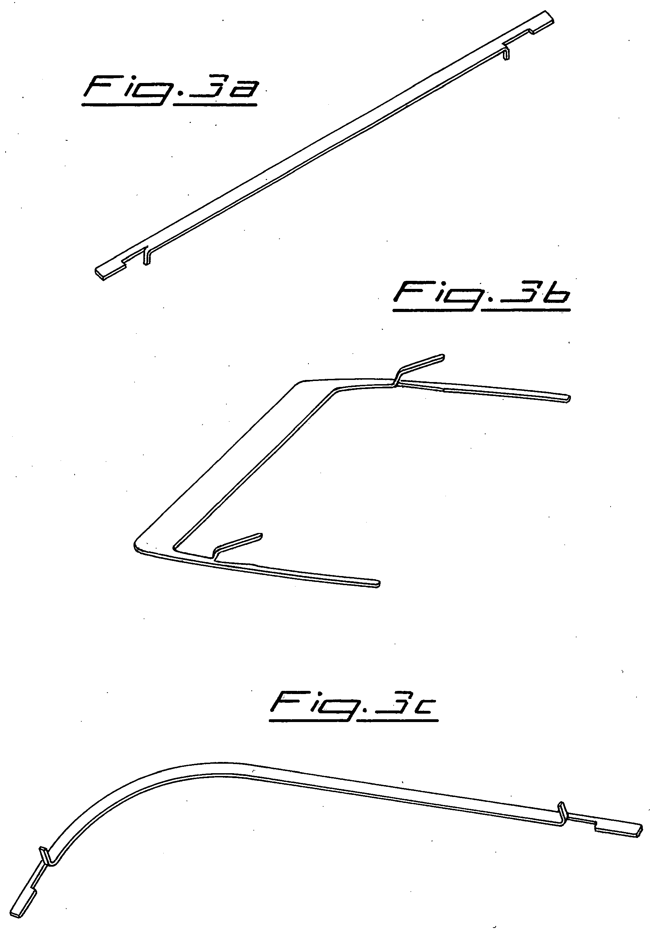

With reference to figure 3a, there is shown that the metal strap according to the present invention can be rectilinear and provided with hooks at the two ends. In this case, four metal straps can be used for each gasket, arranged like the four sides of a quadrilateral figure so as to maintain the gasket entirely adherent to the door or front of the oven.

Alternatively, as shown in figures 3b and 3c, the metal strap can be formed of more rectilinear segments forming right angles between them, so that each metal strap covers more sides of the oven door or front whereto the gasket has to be applied. In this way, in order to maintain the gasket entirely adherent to the oven door or front, it will be sufficient to place one or two metal straps inside the tubular member that forms the gasket.

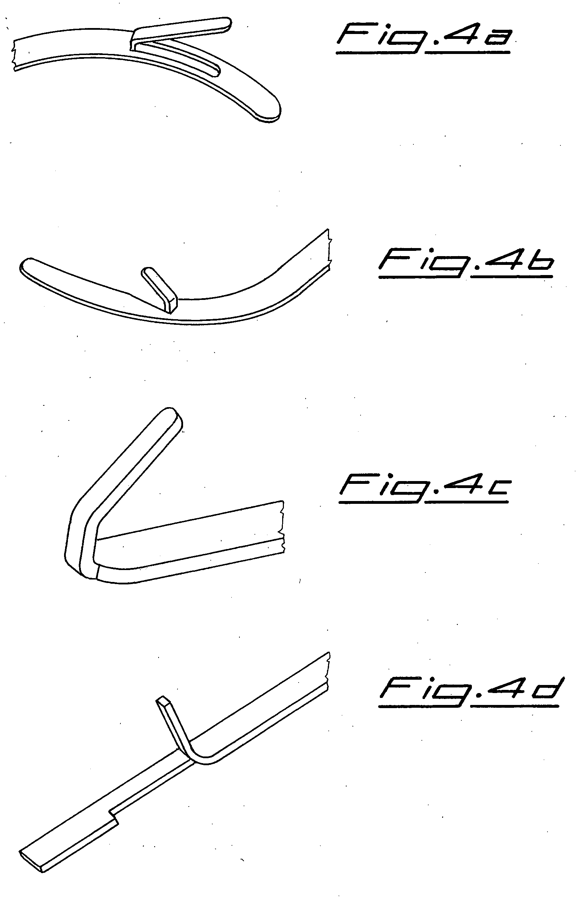

Figure 4 shows in detail more kinds of possible conformation of hooks 4, which are preferably formed of metal tangs cut from the same metal strap 3.

In figure 4a the tang that forms hook 4 is made by means of a U cutting longitudinally made in the metal strap.

Figure 4b shows a different embodiment wherein the tang forming hook 4 is made by means of an oblique cutting on the metal strap edge.

On the contrary, hook 4 shown in figure 4c is positioned at the end of the metal strap, and is made of a restricted portion of the same strap.

Finally, in figure 4d there is shown a hook 4 made by means of a L cutting on metal strap 3.

Further variant and additions may be made by those skilled in the art to the here described and illustrated embodiments, by remaining within the scope of the invention itself. For example, instead of being formed of metal tangs, hooks 4 may be of any known type, which is suitable for making a coupling of the gasket to the oven door or front.

## Claims

1. Gasket (1) for a pyrolytic oven, comprising a tubular member (2) in glass fiber provided with a metal reinforcement, **characterized in that** at least one metal strap (3) is arranged inside said tubular member, provided with hooks (4) which protrude out of said tubular member (2) trough suitable openings of said tubular member (2).

2. Gasket (1) according to claim 1, **characterized in that** said metal strap (3) is rectilinear and is provided with two hooks (4) at the ends thereof.

3. Gasket (1) according to claim 1, **characterized in that** said metal strap (3) is composed of more rectilinear segments reciprocally forming substantially right angles.

4. Gasket (1) according to any one of the preceding claims, **characterized in that** said hooks (4) are positioned at the ends of the metal strap and are formed of restricted portions thereof.

5. Gasket (1) according to any one of claims 1 to 3, **characterized in that** said hooks (4) are formed of metal tangs cut from the same strap (3).

6. Gasket (1) according to claim 5, **characterized in that** said tangs which form the hooks (4) are made by means of a longitudinal U-cutting on the metal strap.

7. Gasket (1) according to claim 5, **characterized in that** said tangs which form the hooks (4) are made by means of an oblique cutting on the edge of the metal strap.

8. Gasket (1) according to claim 5, **characterized in that** said tangs which form the hooks (4) are made by means of an L-cutting on the edge of the metal strap (3).
